# FASCICULE DE BREVET EUROPEEN

(11) **EP 2 553 993 B1**
(45) Date de publication et mention de la délivrance du brevet: **04.04.2018**
(21) Numéro de dépôt: 11712505.4
(22) Date de dépôt: 24.03.2011
(51) Int. Cl.: H04W 68/12, H04L 29/08, G06F 9/46, H04L 29/06, H04L 29/12, G06F 9/54

(54) **PROCÉDÉ ET SYSTÈME DE COMMUNICATION ENTRE UN ÉQUIPEMENT ET UN SERVEUR**
VERFAHREN UND SYSTEM ZUR KOMMUNIKATION ZWISCHEN EINER VORRICHTUNG UND EINEM SERVER
METHOD AND SYSTEM FOR COMMUNICATION BETWEEN AN EQUIPMENT AND A SERVER

(30) Priorité: 30.03.2010 FR 1052338
(43) Date de publication de la demande: 06.02.2013
(73) Titulaire: Schneider Electric Industries SAS, 92500 Rueil-Malmaison (FR)
(72) Inventeur: CAMINEL, Thierry, F-31000 Toulouse (FR)
(86) Numéro de dépôt international: PCT/EP2011/054509
(87) Numéro de publication internationale: WO 2011/120864

(56) Documents cités:
- WO-A1-95/26113
- WO-A1-2004/012413
- HORRELL S: "MICROSFT MESSAGE QUEUE (MSMQ)", ENTERPRISE MIDDLEWARE, XEPHON, NEWBURY, US, 1 juin 1999 (1999-06-01), pages 20-31, XP001096346, ISSN: 1462-1525

## Description

La présente invention concerne un procédé et un système de communication entre un équipement et un serveur informatique distants. Elle s'applique notamment à la télésurveillance et/ou télécommande d'équipements bureautiques, domestiques ou industriels, et de véhicules ou de bâtiments.

De plus en plus d'équipements disposent de moyens de communication leur permettant d'échanger des données, via Internet, avec des serveurs informatiques. Ces serveurs implémentent des services tels que la surveillance des équipements, la gestion des alarmes, le traitement, l'archivage ou l'affichage des données collectées, l'installation et la mise à jour des logiciels embarqués exécutés par ces équipements, la télécommande, etc.

Un problème se pose lorsque ces équipements ne disposent pas d'une adresse IP publique statique.

Un équipement disposant d'une adresse IP publique statique peut être contacté à tout moment par un serveur. Ce n'est plus le cas lorsque l'équipement ne dispose pas d'une adresse IP publique statique.

Les cas où l'on se trouve en présence d'équipements ne disposant pas d'adresse IP publique statique sont cependant nombreux. C'est le cas notamment pour un équipement se trouvant derrière un dispositif implémentant un protocole de translation d'adresse (ou « NAT » de l'anglais « Network Address Translation »), tel qu'un routeur ADSL, et pour un équipement connecté à Internet par l'intermédiaire un réseau de téléphonie mobile en mode paquet, tel qu'un réseau GPRS ou 3G.

Il est connu du document WO2004/012413 une méthode et un système permettant la communication entre un poste client et un serveur. Lorsque le serveur souhaite se connecter à un poste client, il envoie un message à un portail d'autorisation qui relaie le message au poste client en utilisant un protocole différent de l'Internet, comme par exemple un protocole utilisant les messages de type SMS. Dans tous les cas, cette solution oblige l'envoi d'un message de type SMS au poste client même si celui-ci est déjà connecté.

La présente invention a pour objectif de proposer une solution adaptée pour échanger des données avec un équipement, sur un canal de communication sur lequel cet équipement ne dispose pas d'adresse publique statique (IP ou autre). En outre, l'invention a pour objectif de proposer une solution qui soit à la fois économique et robuste.

Un autre objectif de l'invention est de proposer une solution qui permette d'échanger des données avec un nombre important d'équipements, dont le volume de données à traiter peut être très important.

Selon un premier aspect, l'invention concerne un système de communication entre un équipement et un serveur informatique distants tel que défini dans la revendication 1, l'équipement et le serveur comportant chacun un premier moyen de communication pour échanger des données sur un premier canal de communication. Les premiers moyens de communication sont adaptés à établir une connexion avec au moins un serveur de type Message-Oriented-Middleware (MOM) comportant au moins une file d'attente pour l'échange de données entre l'équipement et le serveur. En outre, l'équipement et le serveur comportent chacun un second moyen de communication pour échanger des données sur un second canal de communication, le second canal de communication étant adapté à permettre au serveur d'inviter l'équipement à se connecter au serveur MOM via le premier canal de communication.

Contrairement à l'état de la technique, l'emploi du second canal de communication n'est pas obligatoire si l'équipement est déjà connecté.

De préférence, le second canal de communication est au moins en partie constitué par un réseau de téléphonie mobile dans lequel l'équipement dispose d'un numéro de téléphone associé. De préférence, le premier canal de communication comporte au moins deux chemins possibles, chaque chemin comportant au moins un serveur MOM avec lequel les premiers moyens de communication sont adaptés à établir une connexion, chaque serveur MOM comportant au moins une file d'attente pour l'échange de données entre l'équipement et le serveur.

De préférence, l'équipement comporte des moyens de déterminer un classement des serveurs MOM en fonction de leur position relative à l'équipement. De préférence, l'équipement comporte des moyens de déterminer un classement des serveurs MOM en fonction de leur charge.

De préférence, le système comporte au moins deux serveurs configurés pour se connecter à chacun des serveurs MOM et pour échanger des données avec l'équipement.

Selon un deuxième aspect, l'invention concerne un procédé de communication entre un équipement et un serveur informatique distants tel que défini dans la revendication 5. Les données sont échangées sur un premier canal de communication par l'intermédiaire d'au moins un serveur MOM comportant au moins une file d'attente. Le procédé comporte une étape de dépôt par le serveur d'au moins un message dans la file d'attente et, lorsqu'un critère d'absence de remise à l'équipement d'un message mémorisé dans la file d'attente est vérifié, le procédé comporte au moins l'une des étapes suivantes :
- une étape d'invitation, au cours de laquelle le serveur invite, sur un second canal de communication, l'équipement à se connecter, via le premier canal de communication, au serveur MOM,
- une étape de dépôt par le serveur du message non remis dans une file d'attente d'au moins un autre serveur MOM auquel l'équipement peut se connecter.

De préférence, l'invitation à se connecter est transmise sous la forme d'un SMS, qui intègre de préférence un code d'identification du serveur MOM auquel l'équipement est invité à se connecter. Est également décrit un procédé de communication entre un équipement et un serveur informatique distants, dans lequel les données sont échangées sur un premier canal de communication par l'intermédiaire d'au moins un serveur MOM parmi une pluralité de serveurs MOM, chaque serveur MOM comportant au moins une file d'attente pour l'échange de données entre l'équipement et le serveur. Le procédé comporte :
- une étape de classement des serveurs MOM en fonction de la position des serveurs MOM relativement à l'équipement, et/ou de la charge des serveurs MOM,
- une étape de dépôt par l'équipement d'au moins un message dans une file d'attente du serveur MOM placé en première position dans le classement des serveurs MOM.

De préférence, lorsqu'un critère d'absence de remise au serveur d'un message déposé dans un serveur MOM est vérifié, le procédé comporte une étape de dépôt par l'équipement du message non remis dans une file d'attente du serveur MOM suivant dans le classement des serveurs MOM.

L'invention sera mieux comprise à la lecture de la description suivante, donnée à titre d'exemple nullement limitatif, et faite en se référant aux figures qui représentent :
- Figure 1 : une représentation schématique d'un système de communication selon l'invention,
- Figure 2 : une représentation schématique d'un système de communication selon un premier mode préféré de réalisation,
- Figure 3 : un diagramme représentant les étapes d'un procédé de communication du serveur vers l'équipement, selon un premier mode préféré de mise en oeuvre,
- Figure 4 : une représentation schématique d'un système de communication selon un second mode préféré de réalisation,
- Figure 5 : un diagramme représentant les étapes d'un procédé de communication du serveur vers l'équipement, selon un second mode préféré de mise en oeuvre,
- Figure 6 : un diagramme représentant les étapes d'un procédé de communication de l'équipement vers le serveur.

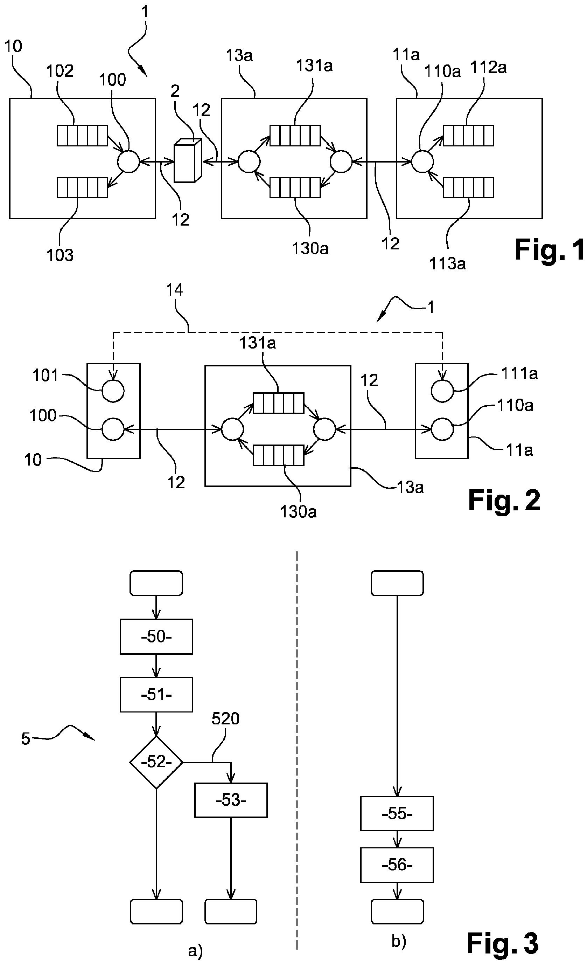

La figure 1 représente un système 1 de communication entre au moins un équipement 10 et un serveur 11a informatique distants, selon l'invention.

Par « distants », on entend que le serveur 11a et l'équipement 10 sont des dispositifs matériellement distincts, reliés notamment par Internet.

La présente invention concerne à la fois les échanges de données dans un sens, dit « sens montant », de l'équipement 10 vers le serveur 11a, et dans un sens, dit « sens descendant », du serveur 11a vers l'équipement 10.

L'invention s'applique à tout type d'équipement pouvant être amené à échanger des données avec un serveur informatique via Internet. L'équipement 10 peut être fixe, tel qu'un équipement domestique (chaudière, capteur de présence pour la télésurveillance, etc.) ou bureautique (distributeur à café, système de climatisation, etc.), ou il peut être mobile, tel qu'un ordinateur ou téléphone portable, un véhicule d'une flotte de véhicules, etc.

L'équipement 10 comporte par exemple un processeur ou microprocesseur relié à des moyens de mémorisation (disque dur magnétique, mémoire RAM et/ou ROM, disque optique, etc.) par un bus de communication. Un logiciel est mémorisé dans les moyens de mémorisation, sous la forme d'un ensemble d'instructions de code de programme qui, lorsqu'elles sont exécutées par le processeur, permettent notamment d'échanger des données avec le serveur 11a.

Le serveur 11a informatique implémente des services tels que la surveillance de l'équipement 10, la gestion des alarmes, le traitement, l'archivage ou l'affichage des données collectées, l'installation et la mise à jour des logiciels embarqués exécutés par l'équipement 10, la télécommande, etc.

Le serveur 11a est un ordinateur comportant au moins un processeur relié à des moyens de mémorisation (disque dur magnétique, mémoire RAM et/ou ROM, disque optique, etc.) par un bus de communication. Un logiciel est mémorisé dans les moyens de mémorisation, sous la forme d'un ensemble d'instructions de code de programme qui, lorsqu'elles sont exécutées par le processeur, permettent notamment d'échanger des données avec l'équipement 10.

L'équipement 10 et le serveur 11a comportent chacun un premier moyen de communication, respectivement 100 et 110a, pour échanger des données sur un premier canal de communication 12. Les premiers moyens de communication 100, 110a peuvent être de tout type adapté, et peuvent être de même type ou de type différent.

Sur le premier canal de communication 12, l'équipement 10 et le serveur 11a communiquent par l'intermédiaire d'au moins un serveur de files d'attentes de messages, configuré pour exécuter un « intergiciel » orienté messages, connu sous le nom de « message-oriented middleware » dans la littérature anglo-saxonne, ou plus généralement sous l'acronyme « MOM ».

Dans la suite de la description, on désigne par « serveur MOM » 13a le serveur de files d'attentes de messages, et par « MOM » le logiciel exécuté.

Le serveur MOM 13a est matériellement distinct de l'équipement 10 et du serveur 11a.

Le serveur MOM 13a est un ordinateur comportant au moins un processeur relié à des moyens de mémorisation (disque dur magnétique, mémoire RAM et/ou ROM, disque optique, etc.) par un bus de communication. Un MOM, notamment, est mémorisé dans les moyens de mémorisation, sous la forme d'un ensemble d'instructions de code de programme qui, lorsqu'elles sont exécutées par le processeur, permettent de gérer une ou plusieurs files d'attente pour la communication asynchrone entre l'équipement 10 et le serveur 11a.

Par « communication asynchrone », on entend que l'équipement 10 et le serveur 11a n'ont besoin pas d'être connectés simultanément au serveur MOM 13a lorsqu'ils communiquent. A cet effet, le serveur MOM 13a utilise des files d'attente par lesquelles transitent les messages.

Lorsque le serveur 11a (ou l'équipement 10) doit envoyer un message, le premier moyen de communication se connecte au serveur MOM 13a, par exemple une connexion TCP/IP, et dépose ce message dans une file d'attente associée à l'équipement 10 (ou au serveur 11a). Lorsque le premier moyen de communication de l'équipement 10 (ou le serveur 11a) se connecte au serveur MOM 13a, par exemple une connexion TCP/IP, le message lui est remis.

Le protocole de communication entre le serveur MOM 13a et l'équipement 10 d'une part et le serveur 11a d'autre part est de préférence normalisé, par exemple conforme à la norme AMQP (de l'anglais « Advanced Message Queuing Protocol »).

De préférence, le serveur MOM 13a comporte au moins deux files d'attente : une file d'attente 131a pour échanger des données dans le sens montant et une file d'attente 130a pour échanger des données dans le sens descendant. En d'autres termes, le serveur MOM 13a permet de communiquer de façon asynchrone dans les deux sens.

Rien n'exclut, suivant d'autres exemples, de se limiter à une communication asynchrone dans un seul sens, montant ou descendant.

De préférence, chaque file d'attente 130a, 131a du serveur MOM 13a est dédiée à un équipement 10. En d'autres termes, dans le cas d'un système comportant une pluralité d'équipements, ceux-ci utilisent des files d'attentes différentes du serveur MOM 13a ou de serveurs MOM différents.

Dans une variante, avant d'envoyer un message, le serveur 11a (respectivement l'équipement 10) place ce message dans une file d'attente locale 113a d'émission (respectivement 102). De préférence, lorsqu'il se voit remettre un message par le serveur MOM 13a, le serveur 11a (respectivement l'équipement 10) place ce message dans une file d'attente locale 112a de réception (respectivement 103).

On note dès à présent un premier avantage obtenu par l'utilisation d'au moins un serveur MOM : la possibilité d'échanger des données du serveur 11a informatique vers l'équipement 10 même lorsque ledit équipement ne dispose pas d'adresse publique statique (IP ou autre).

Tel qu'on l'a vu précédemment, les cas où un équipement 10 ne dispose pas d'une adresse publique statique sont nombreux. On peut citer par exemple les cas où :
- l'équipement 10 est placé derrière un dispositif 2 implémentant un protocole NAT : c'est généralement le cas pour un pare-feu et/ou un routeur ADSL, l'équipement 10 est alors doté d'une adresse IP privée statique ou dynamique ;
- l'équipement 10, lorsqu'il souhaite établir une communication avec le serveur 11a, doit au préalable obtenir une adresse IP publique dynamique : c'est notamment le cas pour équipement embarqué dans, ou communiquant via, un terminal mobile dans un réseau de téléphonie mobile en mode paquet, tel qu'un réseau GPRS / EGPRS ou 3G.

On comprend qu'en dotant le serveur MOM 13a d'une adresse IP publique statique, le serveur 11a sera en mesure de déposer un message dans une file d'attente 130a de ce serveur MOM. Le message, déposé dans une file d'attente persistante du serveur MOM, est mémorisé jusqu'à ce que l'équipement 10 se connecte à son tour à ce serveur MOM. Des connexions TCP/IP au serveur MOM 13a sont, par rapport à un équipement ou un serveur, des connexions sortantes qui ne sont pas bloquées, notamment, par un dispositif 2 implémentant un protocole NAT.

On note également un second avantage obtenu par l'utilisation d'au moins un serveur MOM 13a : la possibilité d'encapsuler très facilement des données de tout type de protocole dans les messages échangés via les files d'attentes, notamment des données d'un protocole HTTP (acronyme de l'anglais « HyperText Transfer Protocol »).

Par exemple, l'équipement 10 peut comporter un serveur web embarqué, utilisé pour le configurer via des pages HTML (acronyme de l'anglais « Hypertext Markup Language ») ou des « Web Services ». Le serveur 11a peut comporter un serveur HTTP.

Un utilisateur peut se connecter au serveur 11a pour configurer le serveur web embarqué dans l'équipement 10. Le serveur 11a peut par exemple extraire l'identificateur de l'équipement 10 de l'URL des requêtes HTTP formulées par le serveur HTTP, et envoyer un message contenant le contenu de la requête HTTP à la file d'attente 130a du serveur MOM 13a. Celui-ci fait suivre le message vers l'équipement 10 qui peut reconstruire la requête HTTP d'après le contenu, et la transmettre au serveur web embarqué. Le serveur web traite cette requête et la réponse HTTP est encapsulée dans un message transmis au serveur 11a via le serveur MOM 13a.

La figure 2 représente un premier mode préféré de réalisation d'un système 1 de communication.

Dans ce mode de réalisation, l'équipement 10 et le serveur 11a comportent également chacun un second moyen de communication, respectivement 101 et 111a, pour échanger des données sur un second canal de communication 14.

Sur ce second canal de communication 14, l'équipement 10 dispose d'une adresse publique statique, permettant au serveur 11a de le contacter directement. De préférence, le second canal de communication 14 est au moins en partie constitué par un réseau de téléphonie mobile, par exemple de type GSM ou 3G, et l'adresse publique statique est un numéro de téléphone associé à l'équipement 10.

On comprend donc que, du fait de ce second canal de communication 14, le serveur 11a sera en mesure, lorsqu'il aura déposé un message dans la file d'attente 130a du serveur MOM 13a, d'en informer l'équipement 10. Ceci est avantageux, notamment, pour réduire la durée de mémorisation des messages par le serveur de MOM et pour améliorer les chances de remise des messages à l'équipement 10.

La figure 3 représente un procédé 5 de communication entre un équipement 10 et un serveur 11a d'un système de communication selon le premier mode de réalisation décrit en référence à la figure 2.

Le procédé 5 illustré par la figure 3 vise plus particulièrement à transmettre des données dans le sens descendant.

La partie a) de la figure 3 représente les étapes du procédé exécutées principalement côté serveur 11a, et la partie b) représente les étapes du procédé exécutées principalement côté équipement 10.

Le procédé 5 comporte une étape 51 de dépôt, au cours de laquelle le serveur 11a dépose au moins un message dans la file d'attente 130a du serveur MOM 13a, auquel le serveur 11a s'est préalablement connecté, par exemple au cours d'une étape 50 préalable de connexion.

De préférence, le serveur 11a est connecté de façon permanente au serveur MOM 13a, c'est-à-dire que dès qu'il le peut, et s'il n'est pas déjà connecté à ce serveur MOM, le serveur 11a exécute l'étape 50 de connexion avec ce serveur MOM 13a.

Tel que représenté sur la partie b), l'équipement 10 récupère le message au cours d'une étape 56 de remise, après s'être préalablement connecté, au cours d'une étape 55 de connexion, au serveur MOM 13a dans une file d'attente duquel un message est mémorisé à son attention.

Après avoir déposé un message dans la file d'attente 130a, le serveur 11a vérifie, au cours d'une étape 52, si un critère d'absence de remise du message a été vérifié. Lorsque le serveur 11a détermine que le message mémorisé dans la file d'attente 130a n'a pas été remis à l'équipement 10 (référence 520), il exécute une étape 53 d'invitation, au cours de laquelle ledit serveur 11a invite l'équipement 10 à se connecter au serveur MOM 13a. L'invitation à se connecter est émise sur le second canal de communication 14, sur lequel l'équipement 10 dispose d'une adresse publique statique. Dans une variante de réalisation, l'étape 53 d'invitation peut être mise en oeuvre par le serveur MOM lui-même qui envoie un message à l'équipement via le second canal de communication 14. Dans la suite de la description, on s'intéressera au cas où il s'agit du serveur qui invite l'équipement à se connecter au serveur MOM mais il faut comprendre que l'invention peut également fonctionner si c'est le serveur MOM qui invite l'équipement à se connecter.

Le critère d'absence de remise est par exemple vérifié lorsque, après avoir déposé un message dans la file d'attente 130a, le serveur n'a pas reçu d'accusé de réception dans un délai de durée prédéfinie. L'accusé de réception est par exemple généré par le serveur MOM 13a qui notifie le serveur 11a lorsque l'équipement 10 a récupéré le message, ou par l'équipement 10 qui peut déposer un message, faisant office de d'accusé de réception, dans la file d'attente 131a à destination du serveur 11a.

D'autres exemples sont possibles. Notamment, le serveur 11a peut être configuré pour inviter l'équipement 10 à se connecter immédiatement après avoir déposé un message dans la file d'attente 130a. Dans ce cas, le critère d'absence de remise est vérifié lorsque le message a fini d'être déposé dans la file d'attente 130a et que l'équipement 10 n'est pas connecté au serveur MOM 13a.

Dans un exemple préféré de mise en oeuvre, lorsque le second moyen de communication 101 de l'équipement 10 comporte un module GSM, GPRS / EDGE ou 3G, l'invitation à se connecter est transmise sous la forme d'un SMS (acronyme de l'anglais « short message service »). Lorsque l'équipement 10 reçoit ce SMS, il l'interprète comme une invitation à se connecter au serveur MOM 13a.

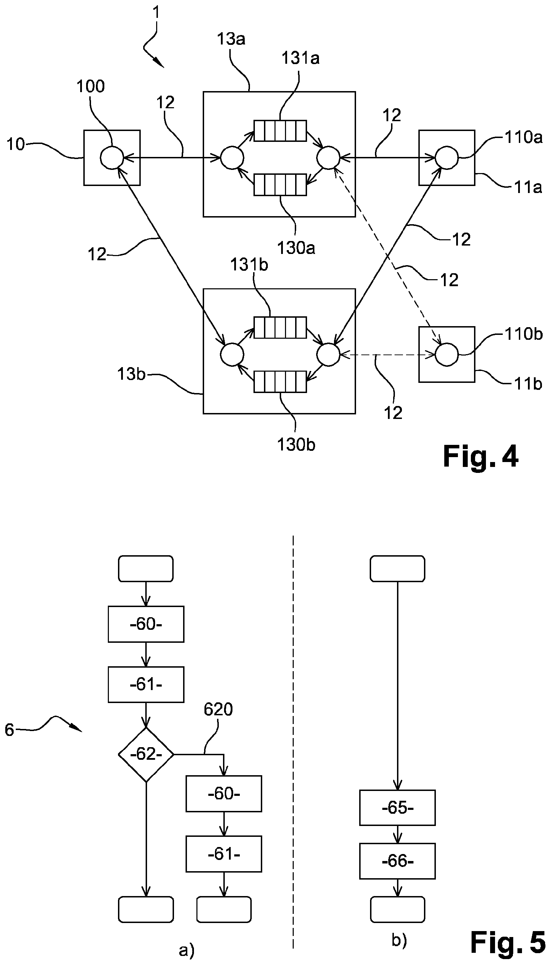

La figure 4 représente un système 1 de communication selon un second mode préféré de réalisation, compatible avec le premier mode de réalisation, décrit en référence à la figure 2.

Dans ce mode réalisation, le premier canal de communication 12 comporte au moins deux chemins possibles, et chaque chemin comporte au moins un serveur MOM, respectivement 13a et 13b. Les serveurs MOM 13a et 13b sont matériellement distincts, et le serveur 11a et l'équipement 10 peuvent échanger des données soit par l'intermédiaire du serveur MOM 13a, soit par l'intermédiaire du serveur MOM 13b, soit par l'intermédiaire des deux.

Dans une variante, également visible sur la figure 4, le système comporte également au moins un autre serveur 11b informatique distant comportant un premier moyen de communication 110b. Les files d'attente 131a, 131b des serveurs MOM respectivement 13a et 13b, associées au serveur 11a, sont également associées à l'autre serveur 11b. L'autre serveur 11b peut se connecter aux serveurs MOM 13a et/ou 13b, et récupérer les messages des files d'attente 131a et/ou 131b. De la sorte, on comprend qu'on assure une meilleure répartition de la charge des traitements entre les différents serveurs 11a et 11b, et une meilleure disponibilité en cas de défaillance d'un serveur. De plus, on peut traiter les demandes d'un nombre plus important d'équipements.

De préférence, l'équipement 10 comporte des moyens de déterminer un classement des serveurs MOM 13a, 13b en fonction de leur position par rapport à l'équipement 10.

Alternativement ou en complément, l'équipement 10 comporte des moyens de déterminer un classement des serveurs MOM 13a, 13b en fonction de leur charge.

La position relative d'un serveur MOM 13a, 13b est par exemple déterminée d'après la durée d'un aller-retour d'informations entre l'équipement 10 et le serveur MOM, par exemple en exécutant depuis l'équipement la commande « Ping » avec l'adresse IP du serveur MOM. Suivant un autre exemple non limitatif, chaque serveur MOM 13a, 13b dispose d'un moyen de localisation, tel qu'un module GPS, et il transmet sa localisation à l'équipement 10 qui la compare à la sienne.

La charge est par exemple simplement transmise par chaque serveur MOM 13a, 13b, sur requête de l'équipement 10. La charge transmise correspond par exemple à une estimation de sa charge actuelle et/ou prévisionnelle, sous la forme d'un taux d'occupation du ou des processeurs.

Du fait de l'établissement d'un classement des serveurs MOM 13a, 13b, l'équipement 10 sera en mesure de sélectionner le serveur MOM le plus proche de lui, et/ou le moins chargé, et la qualité de service sera améliorée et/ou le coût de la communication sera réduit. Ceci est particulièrement avantageux dans le cas où la position des serveurs MOM n'est pas maîtrisée, par exemple dans le cas où l'opérateur du système 1 de communication n'est pas le propriétaire des serveurs MOM, qui peuvent être des serveurs partagés dans le cadre d'une architecture distribuée du type « cloud computing ».

La figure 5 représente un procédé 6 de communication entre un équipement 10 et un serveur 11a dans le cas où les serveurs MOM 13a, 13b comportent au moins des files d'attente 130a, 130b pour échanger des données dans le sens descendant.

La partie a) de la figure 5 représente les étapes du procédé exécutées principalement côté serveur 11a, et la partie b) représente les étapes du procédé exécutées principalement côté équipement 10.

Le procédé 6 comporte une étape 61 de dépôt, au cours de laquelle le serveur 11a dépose au moins un message dans une file d'attente 130a du serveur MOM 13a, auquel le serveur 11a s'est préalablement connecté, par exemple au cours d'une étape 60 préalable de connexion.

De préférence, le serveur 11a est connecté de façon permanente à au moins un serveur MOM 13a, 13b. En d'autres termes, dès qu'il le peut, et s'il n'est pas déjà connecté à un serveur MOM, le serveur 11a exécute l'étape 60 de connexion avec un ou plusieurs serveurs MOM 13a, 13b. De préférence, le serveur 11a est connecté de façon permanente avec chacun des serveurs MOM 13a, 13b.

Tel que représenté sur la partie b), l'équipement 10 récupère le message au cours d'une étape 66 de remise, après s'être préalablement connecté, au cours d'une étape 65 de connexion, au serveur MOM 13a dans une file d'attente duquel un message est mémorisé à son attention.

Après avoir déposé un message dans la file d'attente 130a, le serveur 11a vérifie, au cours d'une étape 62, si un critère d'absence de remise du message a été vérifié. Lorsque le serveur 11a détermine que le message mémorisé dans la file d'attente 130a n'a pas été remis à l'équipement 10 (référence 620), il exécute à nouveau l'étape 61 de dépôt, cette fois-ci en considérant un autre serveur MOM 13b du système 1 (auquel il s'est préalablement connecté).

Le serveur 11a peut itérer l'étape 62 de détermination si le critère d'absence de remise a été vérifié et l'étape 61 de dépôt (précédée de l'étape 60 de connexion si nécessaire) tant que le critère d'absence de remise est vérifié et tant qu'il existe un serveur MOM comportant une file d'attente dans laquelle le message n'a pas été déposé.

Des exemples adaptés de critères d'absence de remise ont déjà été présentés au cours de la description du procédé 5 en référence à la figure 3. Ceux-ci sont également applicables au procédé 6.

De manière générale, dans un système 1 comportant au moins deux serveurs MOM 13a, 13b, et dans lequel l'équipement 10 et le serveur 11a comportent chacun un second moyen de communication respectivement 101 et 111a, le procédé 5 et le procédé 6 peuvent être combinés.

Par exemple, on peut considérer un premier critère d'absence de remise, associé à la mise en oeuvre des seconds moyens de communication 101 et 111a, et un second critère d'absence de remise, associé à l'utilisation d'un autre serveur MOM 13b.

Suivant un premier exemple, dès qu'un message a été déposé dans une file d'attente d'un serveur MOM 13a, le serveur 11a exécute l'étape 53 d'invitation à se connecter. Le cas échéant, l'invitation à se connecter incorpore de préférence un code d'identification du serveur MOM 13a auquel l'équipement 10 est invité à se connecter.

Suivant un second exemple, le premier critère d'absence de remise est vérifié dès que le second critère d'absence de remise a été vérifié un nombre Nb de fois, Nb étant un entier de préférence égal ou supérieur à deux. Ainsi, dès que le serveur 11a a déposé un message dans au moins Nb serveurs MOM 13a, 13b, sans que le message ait été remis à l'équipement 10 par au moins un de ces Nb serveurs MOM 13a, 13b, le serveur 11a exécute l'étape 53 d'invitation à se connecter. Le cas échéant, l'invitation à se connecter incorpore de préférence un code d'identification d'au moins un parmi les Nb serveurs MOM 13a, 13b auquel l'équipement est invité à se connecter.

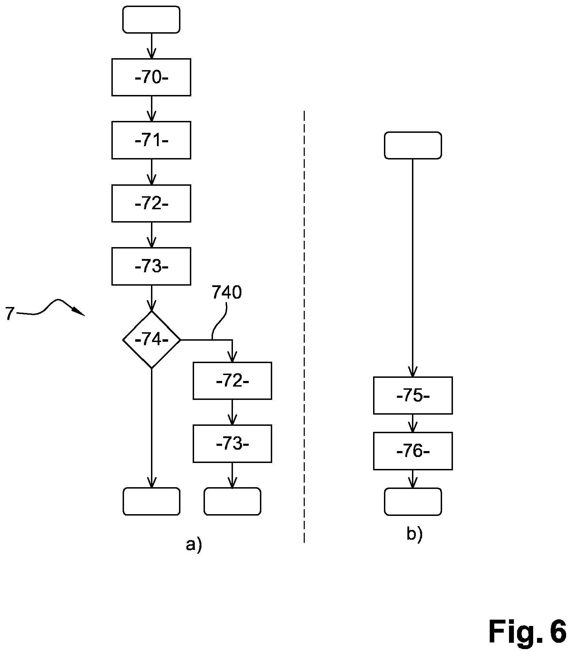

La figure 6 représente un procédé 7 de communication entre un équipement 10 et un serveur 11a dans le cas où les serveurs MOM 13a, 13b comportent au moins des files d'attente 131a, 131b pour échanger des données dans le sens montant.

La partie a) de la figure 6 représente les étapes du procédé exécutées principalement côté équipement 10, et la partie b) représente les étapes du procédé exécutées principalement côté serveur 11a.

Le procédé 7 comporte une étape 71 classement, au cours de laquelle l'équipement 10 détermine un classement des serveurs MOM 13a, 13b, en fonction de l'une au moins des caractéristiques suivantes, préalablement déterminées au cours d'une étape 70 :
- la position du serveur MOM 13a, 13b relativement à l'équipement,
- la charge actuelle ou prévisionnelle du serveur MOM 13a, 13b.

Le procédé 7 comporte ensuite une étape 73 de dépôt, au cours de laquelle l'équipement 10 dépose au moins un message dans une file d'attente du serveur MOM qui a été classé en première position, suite à l'étape 71 de classement. Par exemple, il s'agit du serveur MOM 13a, auquel l'équipement 10 s'est préalablement connecté, au cours d'une étape 72 de connexion.

Tel que représenté sur la partie b), le serveur 11a récupère le message au cours d'une étape 76 de remise, après s'être préalablement connecté, au cours d'une étape 75 de connexion, au serveur MOM 13a dans une file d'attente duquel un message est mémorisé à son attention. De préférence, le serveur 11a est connecté de façon permanente à chacun des serveurs MOM 13a, 13b.

Dans une variante, après avoir déposé un message dans la file d'attente 131a, l'équipement 10 vérifie, au cours d'une étape 74, si un critère d'absence de remise du message a été vérifié. Lorsque l'équipement 10 détermine que le message mémorisé dans la file d'attente 131a n'a pas été remis au serveur 11a (référence 740), il exécute à nouveau l'étape 73 de dépôt, cette fois-ci en considérant le serveur MOM suivant dans le classement, par exemple le serveur MOM 13b (auquel il s'est préalablement connecté).

L'équipement 10 peut itérer l'étape 74 de détermination si le critère d'absence de remise a été vérifié et l'étape 73 de dépôt (précédée de l'étape 72 de connexion si nécessaire) tant que le critère d'absence de remise est vérifié et tant qu'il existe un serveur MOM comportant une file d'attente dans laquelle le message n'a pas été déposé.

Des exemples adaptés de critères d'absence de remise ont déjà été présentés au cours de la description du procédé 5 en référence à la figure 3. Ceux-ci sont également applicables au procédé 7.

Rien n'exclut, si l'équipement 10 et le serveur 11a comportent chacun un second moyen de communication respectivement 101, 111a, d'inviter le serveur 11a à se connecter au serveur MOM 13a. Toutefois, le serveur 11a étant préférentiellement connecté de façon permanente à chaque serveur MOM 13a, 13b, si le critère d'absence de remise du message est vérifié, il est possible que le serveur MOM 13a rencontre des difficultés, auquel cas il est préférable d'en utiliser un autre.

L'invention permet, dans un système 1 de communication entre un équipement 10 et un serveur 11a distants, de s'affranchir des problèmes du fait des mécanismes de translation d'adresse, et du fait que l'équipement est connecté de façon intermittente.

En outre, l'invention est simple et peu coûteuse à mettre en oeuvre, du fait de l'utilisation de serveurs MOM, et du fait que ceux-ci peuvent faire partie d'une architecture distribuée du type « cloud computing ». La position des serveurs MOM pouvant être déterminée, il est possible de choisir le plus proche, qui permettra d'établir, en principe, la communication la moins onéreuse.

De plus, l'invention permet d'avoir un système robuste, du fait notamment de l'utilisation d'un second canal de communication 14 et/ou du fait de la mise en oeuvre de plusieurs serveurs MOM 13a, 13b, voire de plusieurs serveurs 11a, 11b.

## Revendications

1. Système (1) de communication comportant un équipement (10), un premier serveur (11a) informatique distants et au moins un serveur de type Message-Oriented-Middleware, MOM, (13a), l'équipement (10) et le premier serveur (11a) comportant chacun un premier moyen de communication (100, 110a) pour échanger des données sur un premier canal de communication (12) via ledit au moins un serveur MOM et ledit au moins un serveur MOM comportant au moins une file d'attente (130a, 130b) pour l'échange de données entre l'équipement (10) et le serveur (11a), les premiers moyens de communication (100, 110a) étant adaptés à établir une connexion avec ledit au moins un serveur MOM (13a), et l'équipement (10) et le premier serveur (11a) comportant chacun un second moyen de communication (101,111a) pour échanger des données sur un second canal de communication (14), le second canal de communication (14) étant adapté à permettre au premier serveur (11a) d'inviter l'équipement (10) à se connecter audit au moins un serveur MOM via le premier canal de communication.

2. Système (1) selon la revendication 1, **caractérisé en ce que** le second canal de communication (14) est au moins en partie constitué par un réseau de téléphonie mobile dans lequel l'équipement (10) dispose d'un numéro de téléphone associé.

3. Système (1) selon l'une des revendications 1 à 2, **caractérisé en ce que** le premier canal de communication (12) comporte au moins deux chemins possibles, chaque chemin comportant au moins un serveur MOM (13a, 13b) avec lequel les premiers moyens de communication (100, 110a) sont adaptés à établir une connexion, chaque serveur MOM (13a,13b) comportant au moins une file d'attente (130a, 130b, 131a, 131b) pour l'échange de données entre l'équipement (10) et le serveur (11a).

4. Système (1) selon la revendication 3, **caractérisé en ce qu'**il comporte au moins deux serveurs (11a, 11b) configurés pour se connecter à chacun des serveurs MOM (13a, 13b) et pour échanger des données avec l'équipement (10).

5. - Procédé (5) de communication entre un équipement (10) et un premier serveur (11a) informatique distants, mis en oeuvre à partir d'un système de communication tel que défini dans l'une des revendications 1 à 4 et dans lequel les données sont échangées sur un premier canal de communication (12) par l'intermédiaire dudit moins un serveur de type Message-Oriented-Middleware (MOM, 13a) comportant au moins une file d'attente (130a), ledit procédé comportant :
- une étape (51) de dépôt par ledit premier serveur (11a) d'au moins un message dans la file d'attente (130a),
- lorsqu'un premier critère d'absence de remise à l'équipement (10) d'un message mémorisé dans la file d'attente (130a) est vérifié, une étape (53) d'invitation, au cours de laquelle le premier serveur (11a) invite, sur un second canal de communication (14), l'équipement (10) à se connecter, via le premier canal de communication (14), audit au moins un serveur MOM (13a).

6. Procédé (5) selon la revendication 5, **caractérisé en ce que** le second canal de communication (14) est au moins en partie constitué par un réseau de téléphonie mobile dans lequel l'équipement (10) dispose d'un numéro de téléphone associé.

7. Procédé (5) selon la revendication 6, **caractérisé en ce que** l'invitation à se connecter est transmise sous la forme d'un SMS.

8. Procédé (5, 6) selon l'une des revendications 5 à 7, **caractérisé en ce que**, les données étant échangées sur le premier canal de communication (12) par l'intermédiaire d'au moins un serveur MOM parmi une pluralité de serveurs MOM (13a, 13b), l'invitation à se connecter intègre un code d'identification du serveur MOM auquel l'équipement (10) est invité à se connecter.

9. Procédé (5, 6) selon l'une des revendications 5 à 8, **caractérisé en ce que**, lorsqu'un second critère d'absence de remise à l'équipement (10) d'un message mémorisé dans la file d'attente (130a) dudit au moins un serveur MOM (13a) est vérifié, le procédé comporte une étape (61) de dépôt par le serveur (11a) du message non remis dans une file d'attente (130b) d'au moins un autre serveur MOM (13b) auquel l'équipement (10) peut se connecter.

## Patentansprüche

1. Kommunikationssystem (1), das ein Gerät (10), einen ersten entfernten Datenserver (11a) und wenigstens einen Server des Typs Message-Oriented-Middleware, MOM-Server, (13a) umfasst, wobei das Gerät (10) und der erste Server (11a) jeweils ein erstes Kommunikationsmittel (100, 110a) enthalten, um Daten auf einem ersten Kommunikationskanal (12) über den wenigstens einen MOM-Server auszutauschen, und wobei der wenigstens eine MOM-Server wenigstens eine Warteschlange (130a, 130b) enthält, um Daten zwischen dem Gerät (10) und dem Server (11a) auszutauschen, wobei die ersten Kommunikationsmittel (100, 110a) dafür ausgelegt sind, eine Verbindung mit dem wenigstens einen MOM-Server (13a) herzustellen, und wobei das Gerät (10) und der erste Server (11a) jeweils ein zweites Kommunikationsmittel (101, 111a) enthalten, um Daten auf einem zweiten Kommunikationskanal (14) auszutauschen, wobei der zweite Kommunikationskanal (14) so beschaffen ist, dass der erste Server (11a) dem Gerät (10) verbieten kann, sich mit dem wenigstens einen MOM-Server über den ersten Kommunikationskanal zu verbinden.

2. System (1) nach Anspruch 1, **dadurch gekennzeichnet, dass** der zweite Kommunikationskanal (14) wenigstens teilweise durch ein Mobiltelefonnetz gebildet ist, in dem das Gerät (10) eine zugeordnete Telefonnummer hat.

3. System (1) nach einem der Ansprüche 1 bis 2, **dadurch gekennzeichnet, dass** der erste Kommunikationskanal (12) wenigstens zwei mögliche Wege enthält, wobei jeder Weg wenigstens einen MOM-Server (13a, 13b) enthält, mit dem die ersten Kommunikationsmittel (100, 110a) eine Verbindung herstellen können, wobei jeder MOM-Server (13a, 13b) wenigstens eine Warteschlange (130a, 130b, 131a, 131b) enthält, um Daten zwischen dem Gerät (10) und dem Server (11a) auszutauschen.

4. System (1) nach Anspruch 3, **dadurch gekennzeichnet, dass** es wenigstens zwei Server (11a, 11b) umfasst, die konfiguriert sind, sich mit jedem der MOM-Server (13a, 13b) zu verbinden und Daten mit dem Gerät (10) auszutauschen.

5. Verfahren (5) für die Kommunikation zwischen einem Gerät (10) und einem ersten entfernten Datenserver (11a), das durch ein Kommunikationssystem, wie es in einem der Ansprüche 1 bis 4 definiert ist, ausgeführt wird und in dem die Daten auf einem ersten Kommunikationskanal (12) über den wenigstens einen Server des Typs Message-Oriented-Middleware, MOM-Server, (13a), der wenigstens eine Warteschlange (130a) enthält, ausgetauscht werden, wobei das Verfahren Folgendes umfasst:
- einen Schritt (51) des Ablegens wenigstens einer Nachricht in der Warteschlange (130a) durch den ersten Server (11a),
- dann, wenn ein erstes Kriterium für fehlendes Zurückschicken einer in der Warteschlange (130a) gespeicherten Nachricht zu dem Gerät (10) verifiziert wird, einen Schritt (53) des Einladens, in dessen Verlauf der erste Server (11a) das Gerät (10) auf einem zweiten Kommunikationskanal (14) einlädt, sich über den ersten Kommunikationskanal (12) mit dem wenigstens einen MOM-Server (13a) zu verbinden.

6. Verfahren (5) nach Anspruch 5, **dadurch gekennzeichnet, dass** der zweite Kommunikationskanal (14) wenigstens teilweise durch ein Mobiltelefonnetz gebildet ist, in dem das Gerät (10) eine zugeordnete Telefonnummer hat.

7. Verfahren (5) nach Anspruch 6, **dadurch gekennzeichnet, dass** die Einladung zum Verbinden in Form einer SMS übertragen wird.

8. Verfahren (5, 6) nach einem der Ansprüche 5 bis 7, **dadurch gekennzeichnet, dass** die Daten auf dem ersten Kommunikationskanal (12) über wenigstens einen MOM-Server der mehreren MOM-Server (13a, 13b) ausgetauscht werden, wobei die Einladung zum Verbinden einen Identifizierungscode des MOM-Servers, mit dem sich zu verbinden das Gerät (10) eingeladen wird, enthält.

9. Verfahren (5, 6) nach einem der Ansprüche 5 bis 8, **dadurch gekennzeichnet, dass** dann, wenn ein zweites Kriterium für fehlendes Zurückschicken einer in der Warteschlange (130a) des wenigstens einen MOM-Servers (13a) gespeicherten Nachricht zu dem Gerät (10) verifiziert wird, das Verfahren einen Schritt (61) des Ablegens durch den Server (11a) der nicht zurückgeschickten Nachricht in einer Warteschlange (130b) wenigstens eines anderen MOM-Servers (13b), mit dem sich das Gerät (10) verbinden kann, umfasst.

## Claims

1. Communication system (1) including a device (10) and a first computer server (11a) that are remote and at least one server of Message-Oriented-Middleware, MOM, type (13a), the device (10) and the first server (11a) each including a first communication means (100, 110a) for exchanging data on a first communication channel (12) via said at least one MOM server and said at least one MOM server including at least one queue (130a, 130b) for exchanging data between the device (10) and the server (11a), the first communication means (100, 110a) being designed to set up a connection with said at least one MOM server (13a), and the device (10) and the first server (11a) each including a second communication means (101, 111a) for exchanging data on a second communication channel (14), the second communication channel (14) being designed to enable the first server (11a) to invite the device (10) to connect to said at least one MOM server via the first communication channel.

2. System (1) according to Claim 1, **characterized in that** the second communication channel (14) is formed at least partly by a mobile telephony network in which the device (10) has an associated telephone number.

3. System (1) according to either of Claims 1 and 2, **characterized in that** the first communication channel (12) includes at least two possible paths, each path including at least one MOM server (13a, 13b) with which the first communication means (100, 110a) are designed to set up a connection, each MOM server (13a, 13b) including at least one queue (130a, 130b, 131a, 131b) for exchanging data between the device (10) and the server (11a).

4. System (1) according to Claim 3, **characterized in that** it includes at least two servers (11a, 11b) that are configured to connect to each of the MOM servers (13a, 13b) and to exchange data with the device (10).

5. Method (5) for communicating between a device (10) and a first computer server (11a) that are remote, implemented on the basis of a communication system as defined in one of Claims 1 to 4, and wherein the data are exchanged on a first communication channel (12) by way of said at least one server of Message-Oriented-Middleware (MOM) type (13a) including at least one queue (130a), said method including:
- a step (51), performed by said first server (11a), of depositing at least one message in the queue (130a),
- when a first criterion of a lack of delivery, to the device (10), of a message stored in the queue (130a) is met, an invitation step (53), during which the first server (11a), on a second communication channel (14), invites the device (10) to connect, via the first communication channel (12), to said at least one MOM server (13a).

6. Method (5) according to Claim 5, **characterized in that** the second communication channel (14) is formed at least partly by a mobile telephony network in which the device (10) has an associated telephone number.

7. Method (5) according to Claim 6, **characterized in that** the invitation to connect is transmitted in the form of an SMS.

8. Method (5, 6) according to one of Claims 5 to 7, **characterized in that**, the data being exchanged on the first communication channel (12) by way of at least one MOM server from among a plurality of MOM servers (13a, 13b), the invitation to connect incorporates an identification code of the MOM server to which the device (10) is invited to connect.

9. Method (5, 6) according to one of Claims 5 to 8, **characterized in that**, when a second criterion of a lack of delivery, to the device (10), of a message stored in the queue (130a) of said at least one MOM server (13a) is met, the method includes a step (61), performed by the server (11a), of depositing the undelivered message in a queue (130b) of at least one other MOM server (13b) to which the device (10) is able to connect.
